# EUROPÄISCHE PATENTSCHRIFT

(11) **EP 2 501 552 B1**
(45) Veröffentlichungstag und Bekanntmachung des Hinweises auf die Patenterteilung: **30.03.2016**
(21) Anmeldenummer: 10777023.2
(22) Anmeldetag: 17.11.2010
(51) Int. Cl.: B42D 25/324, B29C 65/00, B42D 25/455, B42D 25/41

(54) **WERTDOKUMENT MIT VERSCHWEISSTEN SCHICHTEN**
DOCUMENTS OF VALUE HAVING FUSED LAYERS
DOCUMENT DE VALEUR AVEC COUCHES SOUDÉES

(30) Priorität: 18.11.2009 DE 102009053706
(43) Veröffentlichungstag der Anmeldung: 26.09.2012
(73) Patentinhaber: Giesecke & Devrient GmbH, 81677 München (DE)
(72) Erfinder: RENNER, Patrick, 90542 Eckental (DE); GREGAREK, Andre, 81671 München (DE); RUCK, Jürgen, 83737 Irschenberg (DE)
(86) Internationale Anmeldenummer: PCT/EP2010/067628
(87) Internationale Veröffentlichungsnummer: WO 2011/061203

(56) Entgegenhaltungen:
- US-B1- 6 440 254

## Beschreibung

Die Erfindung betrifft eine mehrschichtige Anordnung zur Herstellung eines Wertdokuments mit verschweißten Schichten, ein Verfahren zur Herstellung einer solchen mehrschichtigen Anordnung sowie ein Wertdokument.

Wertdokumente im Sinne der vorliegenden Erfindung sind beispielsweise Banknoten, Aktien, Anleihen, Urkunden, Gutscheine, Schecks, Lotteriescheine, hochwertige Eintrittskarten, Pässe, Ausweise, Kreditkarten und andere flächige Wertgegenstände. Solche Wertgegenstände können aber auch Verpackungen für gegebenenfalls hochwertige Produkte sein. Der Begriff Wertdokument umfasst im Sinne der vorliegenden Erfindung auch Vorstufen der genannten Wertdokumente, die beispielsweise nicht umlauffähig sind.

Solche Wertdokumente, wie Banknoten, umfassen häufig ein schichtartiges Papiersubstrat, welches aus einem faserartigen Material, wie Baumwollfasern, besteht. Ein solches Papiersubstrat kann Sicherheitselemente enthalten, beispielsweise ein Wasserzeichen oder ein Folienelement in Form eines Sicherheitsfadens, der zumindest teilweise in das Papiersubstrat eingearbeitet ist, oder in Form eines Transferelements, wie einem Patch oder einem Etikett, welches auf der Oberfläche des Papiersubstrats angeordnet ist. Das Papiersubstrat ist porös und besitzt eine große Oberfläche und eine hohe Oberflächenrauigkeit. Daher sind solche Papiersubstrate anfällig für Verschmutzungen, welche beispielsweise die Umlaufzeit einer solchen Banknote herabsetzen.

In der WO 98/15418 wurde daher bereits vorgeschlagen, Wertdokumente, wie Banknoten, vollständig aus Kunststofffolien zu fertigen. In eine solche Kunststoffbanknote können jedoch viele Sicherheitsmerkmale, die aus Wertdokumenten mit einem Papiersubstrat bekannt sind, nicht eingebracht werden, wie beispielsweise Wasserzeichen, Fenster- oder Pendelsicherheitsfäden oder auch Verprägungen, wie sie beispielsweise durch Stich- oder Rastertiefdruck in Papiersubstrate eingebracht werden können. Zudem sind reine Kunststoffbanknoten stark hitzeempfindlich, so dass diese in klimatisch ungünstigen Regionen zur Schrumpfung neigen. Auch die von Papier-Banknoten bekannten Eigenschaften, wie Griffigkeit und Klang, können mit Kunststoff-Banknoten nicht realisiert werden.

Als Alternative wurden beispielsweise in der EP 1 545 902 Mehrschichtsubstrate für Wertdokumente vorgeschlagen, die eine oder mehrere Kunststofffolienschichten und eine oder mehrere Papierschichten umfassen. Ein solches Mehrschichtsubstrat vereint, je nach Aufbau und Anordnung der Schichten, die Eigenschaften von Papierschichten und Kunststofffolienschichten auf verschiedene Art und Weise. Folienverbundbanknoten basieren beispielsweise auf Mehrschichtsubstraten.

Solche Mehrschichtsubstrate können durch Laminieren der verschiedenen Schichten oder auch durch direkte Extrusion der Kunststofffolie auf eine Papierschicht geschaffen werden. Die verschiedenen Schichten eines solchen Mehrschichtsubstrats sind daher zwar fest verbunden, jedoch ist ein solches Mehrschichtsubstrat nur bedingt spaltfest. Mit anderen Worten können sich die verschiedenen Schichten bereits bei bestimmungsgemäßem Verbrauch voneinander lösen oder vor allem bei einem gezielten Spaltungsangriff voneinander getrennt werden. Solche Mehrschichtsubstrate weisen beispielsweise im Fall von Folienverbundbanknoten gegebenenfalls eine verringerte Umlaufzeit auf. Sie sind zudem infolge ihrer Spaltbarkeit zusätzlichen Fälschungsangriffen ausgesetzt, da beispielsweise Teile des Mehrschichtsubstrats abgespalten werden können und durch Fälschungen ersetzt werden können. Diese Nachteile ergeben sich nicht nur bei Folienverbundbanknoten, sondern generell bei Mehrschichtsubstraten, in denen verschiedene Schichten insbesondere aus verschiedenen Materialien aufeinander angeordnet sind, beispielsweise beim Anordnen eines Transferelementes auf einem Substrat.

US 6 440 254 B1 offenbart der Oberbegriff des Anspruchs 1.

Aufgabe der vorliegenden Erfindung ist es daher, eine mehrschichtige Anordnung zur Herstellung eines Wertdokuments anzugeben, die eine erhöhte Spaltfestigkeit und eine erhöhte Sicherheit gegenüber Spaltungsangriffen bietet und zusätzliche Möglichkeiten zum Einbringen von Merkmalen bietet, die das Wertdokument charakterisieren können. Es ist weiterhin Aufgabe der vorliegenden Erfindung, ein Verfahren zur Herstellung einer solchen mehrschichtigen Anordnung und ein entsprechendes Wertdokument anzugeben.

Diese Aufgabe wird durch ein mehrschichtiges Substrat, ein Wertdokument sowie ein Herstellungsverfahren mit den Merkmalen der unabhängigen Ansprüche gelöst. Die abhängigen Ansprüche betreffen bevorzugte Ausgestaltungen und Weiterbildungen der Erfindung.

Die erfindungsgemäße mehrschichtige Anordnung für ein Wertdokument umfasst unter anderem eine erste Schicht, die aus einer Kunststofffolie besteht, und eine zweite Schicht, die aus einer weiteren Kunststofffolie besteht, wobei die Schichten zumindest in einem Überlappungsbereich übereinander angeordnet sind und ein Teilbereich des Überlappungsbereichs einen Verschweißbereich bildet, in welchem die erste und die zweite Schicht derart miteinander verschweißt sind, dass der Verschweißbereich ein taktil und/ oder optisch wahrnehmbares Erkennungs- oder Sicherheitsmerkmal des Wertdokumentes bildet. Die erfindungsgemäße mehrschichtige Anordnung für ein Wertdokument kann das Wertdokument selbst, ein Teil des Wertdokuments oder eine Vorstufe des Wertdokuments sein.

Bei der Kunststofffolie kann es sich um PET (Polyethylenterephthalat), OPP (Orientiertes Polypropylen), PE (Polyethylen), PC (Polycarbonat), PA (Polyamid) oder ein Gemisch aus diesen Materialien handeln. Es sind jedoch auch alle anderen geeigneten Kunststoffmaterialien und deren Gemische einsetzbar. Die Kunststofffolie ist vorzugsweise thermoplastisch. Je nach Anwendung kann die Kunststofffolie bereichsweise mattiert oder glänzend ausgeführt werden. Eine solche bereichsweise Mattierung kann durch Abdecken der Folien mit einem Resistlack und anschließendes Ätzen der Folienoberfläche in dem nicht durch den Resistlack abgedeckten Bereich erhalten werden.

Die Kunststofffolie kann zusätzlich monoaxial oder biaxial gereckt sein. Eine solche Reckung der Kunststofffolie führt unter anderem zu einer erhöhten Einreißfestigkeit der mehrschichtigen Anordnung.

Als Papier kommt jede Art von Papier oder papierartigem Material in Betracht, insbesondere Baumwollpapier. Es kann auch Papier eingesetzt werden, dessen Fasern einen gewissen Anteil x eines Polymermaterials im Bereich zwischen 0 und 100 Gew.-% enthalten.

Erfindungsgemäß werden die erste und die zweite Schicht im Überlappungsbereich übereinander angeordnet. Vorzugsweise sind die erste und zweite Schicht vollständig überlappend ausgebildet.

Durch das anschließende Verschweißen wird eine feste Verbindung zwischen der ersten und der zweiten Schicht geschaffen, die gegebenenfalls eine weitere Verbindung der beiden Schichten darstellt. Beim Verschweißen schmilzt die Kunststofffolie der ersten Schicht teilweise auf und dringt in das Papier ein. Besteht das Papier aus Kunststofffasern, so können diese ebenfalls aufschmelzen und mit der Kunststofffolie der ersten Schicht eine feste Verbindung eingehen. Besteht die zweite Schicht aus einer weiteren Kunststofffolie, so kann diese je nach Wahl der Materialien ebenfalls aufschmelzen und somit wiederum mit der Kunststofffolie der ersten Schicht eine feste Verbindung eingehen. Durch das Verschweißen der ersten und der zweiten Schicht wird die Haftung der beiden Schichten aufeinander erhöht und somit die Verbundstabilität der erfindungsgemäßen mehrschichtigen Anordnung erhöht. Dadurch wird die Spaltfestigkeit der mehrschichtigen Anordnung erhöht. Da beim Verschweißen zumindest die Kunststofffolie der ersten Schicht schmilzt und sich mit der zweiten Schicht verbindet, liegt die erste Schicht nach dem Verschweißen in dem Verschweißbereich in veränderter Form vor. Folglich ist kein zerstörungsfreies Ablösen der ersten Schicht von der zweiten Schicht mehr möglich.

Erfindungsgemäß bildet der Verschweißbereich ein taktil und/oder optisch wahrnehmbares Erkennungs- oder Sicherheitsmerkmal. Dies wird durch eine geeignete Wahl der Verschweißtechnik und durch eine geeignete Abstimmung der Schweißparameter auf die zu verschweißenden ersten und zweiten Schichten erreicht.

In einer bevorzugten Ausgestaltung findet das Verschweißen mit einer Schweißtechnik wie Laserschweißen oder Ultraschallschweißen, beispielsweise rotativem Ultraschallschweißen, statt. Mit diesen Techniken ist es möglich, einen flächigen Bereich zu verschweißen. Bei dem Laserschweißen handelt es sich um eine berührungsfreie Schweißtechnik. Das Ultraschallschweißen ist im Gegensatz zum Laserschweißen nicht berührungsfrei, sondern es werden gravierte Walzen in das Material gedrückt.

Bevorzugt werden die Parameter beim Schweißprozess derart gewählt, dass zu einem gegebenen Zeitpunkt ein Verschweißen nur in einem punktuellen Bereich stattfindet, der das Erzeugen von Schweißpunkten oder Schweißlinien bzw. Schweißnähten mit einem Durchmesser von weniger als 10 µm, 20 µm, 30 µm, 50 µm oder 100 µm gestattet. Je nach Material der beiden zu verschweißenden Schichten und der Parameter der Schweißprozesse kann somit ein beispielsweise punkt- oder linienförmiger Verschweißbereich geschaffen werden, der einen gegenüber nicht verschweißten Bereichen erhabenen Bereich und somit ein taktiles Merkmal für das Wertdokument bildet. Das taktile Merkmal kann durch einen Benutzer haptisch erkannt werden oder maschinell detektiert werden. Bei einem solchen rein taktilen Merkmal ist die Transparenz der ersten und der zweiten Schicht unerheblich, und es können vollständig opake, transluzente, das heißt teilweise transparente, oder vollständig transparente Materialien für die beiden zu verschweißenden Schichten oder gegebenenfalls für weitere darüber oder darunter angeordnete Schichten gewählt werden. Insbesondere beim Ultraschallschweißen, das nicht berührungsfrei erfolgt, können Verschweißbereiche geschaffen werden, die man als Verprägungen bzw. Prägestrukturen oder sogar als Perforationen bezeichnen kann.

Alternativ oder zusätzlich können die Parameter des Schweißprozesses und die Materialien der ersten und der zweiten Schicht so aufeinander abgestimmt werden, dass der Verschweißbereich der ersten und zweiten Schicht optisch wahrnehmbar ist. Im einfachsten Fall wird der Verschweißbereich durch das Verschweißen geschwärzt, wobei die Transparenz bzw. die Opazität der ersten und der zweiten Schicht und gegebenenfalls weiterer darüber oder darunter angeordneter Schichten geeignet gewählt sein muss, so dass der optisch veränderte Verschweißbereich wahrnehmbar ist. Das optische Erkennen des Verschweißbereichs kann visuell durch einen Benutzer oder maschinell geschehen.

Wie erwähnt, kann durch die Auswahl von Laserschweißen oder Ultraschallschweißen als Schweißtechnik der Bereich, in dem zu einem gegebenen Zeitpunkt das Verschweißen von erster und zweiter Schicht stattfindet, sehr klein gewählt werden. Entsprechend kann der Verschweißbereich eine Information für den Betrachter bilden, beispielsweise in Form von Zeichen, Zahlen, Buchstaben, Bildern oder sonstigen charakteristischen Mustern, die dabei eine hohe graphische Auflösung aufweisen können. Der Verschweißbereich kann daher bereits aufgrund seiner Ausgestaltung ein Sicherheitsmerkmal des Wertdokumentes bilden. Alternativ ist es beispielsweise auch denkbar, einen taktil erkennbaren Verschweißbereich in Form von charakteristischen Erhebungen, beispielsweise einer Währungs- und/oder denominationsspezifischen Blindenschrift, vorzusehen.

Die Laserstrahlung oder der Ultraschall, die bzw. der zum Verschweißen verwendet wird, trifft beispielsweise senkrecht oder auch unter einem Winkel gegenüber der Oberflächennormalen der ersten und der zweiten Schicht auf die mehrschichtige Anordnung auf. Die Verwendung einer Schweißtechnik wie das Laser- oder Ultraschallschweißen gestattet es, nur die erste und die zweite Schicht mit der Zwischenschicht aus Papier miteinander zu verschweißen, auch wenn in Strahlungsrichtung bzw. in Richtung der Beschallung vor oder hinter der ersten und der zweiten Schicht weitere Schichten angeordnet sind. Mit anderen Worten gestatten diese Schweißtechniken das gezielte Verschweißen innen liegender Schichten. Dies kann z.B. dadurch geschehen, dass die Laserstrahlung fokussiert wird und die Intensität der zum Verschweißen verwendeten Strahlung derart auf die erste und zweite Schicht abgestimmt ist, dass ein Verschweißen der ersten und der zweiten Schicht nur bei verringertem Strahlquerschnitt, insbesondere im Fokus der Laserstrahlung, stattfindet. Alternativ oder zusätzlich können in der ersten und/oder zweiten Schicht laserstrahlungssensitive oder ultraschallsensitive Substanzen eingebracht sein, die die Laserstrahlung bzw. den Ultraschall absorbieren. Dadurch wird die eingestrahlte Laserstrahlung bzw. der Ultraschall gezielt in der entsprechenden Schicht absorbiert, wodurch sich diese Schicht lokal erhitzt, aufschmilzt und entsprechend mit der benachbarten Schicht verschweißt.

Zum Laserschweißen können Nd:YAG- oder Nd:YVO₄-Laser einsetzt werden. Diese emittieren eine Laserstrahlung mit einer Wellenlänge von 1064 nm die von Materialien, wie PET, nicht oder nur geringfügig absorbiert wird. In die zu verschweißenden Schichten oder in eine der beiden zu verschweißenden Schichten können dann diese Laserstrahlung absorbierende Substanzen eingebracht werden, wie Bis(4-dimethylaminodithiobenzil)nickel oder N,N,N',N'-Tetrakis[4-bis(3-cyanopropyl)aminophenyl]-p-phenylenediaminiumdihexafluorophosphate.

Beim Ultraschallschweißen können entsprechend ultraschallabsorbierend wirkende Substanzen, wie beispielsweise Klebstoffe mit Isocyanat- oder Acrylat-Systemen, verwendet werden. Diese sind vorzugsweise zusätzlich als wärmeaktivierbare Klebstoffe ausgebildet.

Die erste und die zweite Schicht werden verschweißt, obwohl sie nicht direkt aufeinander angeordnet sind, sondern durch eine oder gegebenenfalls mehrere Zwischenschichten getrennt sind. Die Zwischenschicht ist dabei derart ausgestaltet, dass sie das Verschweißen von erster und zweiter Schicht nicht behindert. Dies kann dadurch geschehen, dass die Zwischenschicht beim Verschweißen der ersten und der zweiten Schicht im Verschweißbereich verdrängt wird oder die Schmelze der ersten und gegebenenfalls der zweiten Schicht die Zwischenschicht vollständig durchdringt und somit eine direkte Verbindung der ersten und der zweiten Schicht durch Verschweißen schafft.

Erfindungsgemäß handelt es sich bei der ersten und der zweiten Schicht jeweils um eine Kunststofffolie, die nicht direkt aufeinander angeordnet sind, sondern durch eine oder gegebenenfalls mehrere Zwischenschichten aus Papier getrennt sind. Durch Ultraschall werden die beiden Kunststofffolien durch das Papier hindurch miteinander verschweißt bzw. verprägt. Die aus Papier gebildete Zwischenschicht wird beim Verschweißen der ersten und der zweiten Schicht im Verschweißbereich verdrängt. Dadurch ergibt sich eine besonders gute Spaltfestigkeit des Kunststofffolie/Papier/Kunststofffolie-Verbundes. In Abhängigkeit von den Bedingungen, unter denen das Ultraschallschweißen durchgeführt wird, stellen die Verschweißbereiche Verprägungen bzw. Prägestrukturen oder sogar Perforationen dar. Die Prägestrukturen oder Perforationen sind taktil gut wahrnehmbar.

Die Zwischenschicht kann ebenfalls laser- oder ultraschallsensitiv ausgebildet sein, so dass sie Laserstrahlung bzw. Ultraschall absorbiert. Dadurch wird ebenfalls eine lokale Absorption und entsprechende Erhitzung der Zwischenschicht, und somit der Grenzschicht zwischen erster und zweiter Schicht, gewährleistet.

Erfindungsgemäß bildet der Verschweißbereich, in dem die erste und die zweite Schicht miteinander verschweißt sind, einen taktil und/oder optisch wahrnehmbaren Bereich. In einer vorteilhaften Ausgestaltung umfasst die erste und/oder zweite Schicht, die Zwischenschicht oder gegebenenfalls eine benachbarte Schicht eine Laser-sensitive und/oder Ultraschall-sensitive und/oder thermosensitive Substanz, die infolge der einfallenden Laserstrahlung oder infolge des Ultraschalls oder infolge der beim Verschweißen auftretenden Erwärmung einen Farbumschlag zeigt. Dieser Farbumschlag kann von transparent zu farbig sein, von farbig zu transparent oder von einer ersten Farbe zu einer zweiten Farbe. Der Bereich, in dem der Farbumschlag stattfindet, ist dabei vorzugsweise größer, das heißt breiter, als der Bereich, in dem zu einem gegebenen Zeitpunkt das Verschweißen der ersten und der zweiten Schicht stattfindet. Dies kann dadurch erreicht werden, dass der Farbumschlag bereits bei einer geringeren Intensität der einfallenden Laserstrahlung oder des einfallenden Ultraschalls verglichen mit der Intensität beim Verschweißen oder bei einer geringeren Temperatur als die beim Verschweißen auftretende Temperatur, stattfindet. Da unabhängig davon, ob der Farbumschlag auf eine Laser-sensitive, Ultraschall-sensitive oder thermosensitive Eigenschaft der Substanz zurückgeht, der Farbumschlag beim Arbeitsschritt des Verschweißens stattfindet, weist der Bereich des Farbumschlags eine vorgegebene, konstante Breite um den Verschweißbereich auf. Mit anderen Worten ist der Bereich des Farbumschlags perfekt registerhaltig zu dem Verschweißbereich angeordnet. Eine solche registerhaltige Anordnung des Bereichs des Farbumschlags und des Verschweißbereichs bildet ein Sicherheitsmerkmal, das zum einen von einem Betrachter aufwandsarm überprüft werden kann und zum anderen nur schwer nachgeahmt werden kann. Entsprechend weist dies Sicherheitsmerkmal eine hohe Fälschungssicherheit auf.

Im Sinne der vorliegenden Schrift werden als thermo-, laser- oder ultraschallsensitiv Substanzen bezeichnet, die die oder den beim Schweißen verwendete Laserstrahlung bzw. Ultraschall absorbieren und/oder infolge der einfallenden Laserstrahlung oder des einfallenden Ultraschalls oder infolge der beim Verschweißen auftretenden erhöhten Temperatur einen Farbumschlag zeigen.

In einer bevorzugten Ausgestaltung weist das Wertdokument, das die erfindungsgemäße mehrschichtige Anordnung aufweist, einen Umriss mit Ecken und Kanten auf. Beispielsweise weist das Wertdokument einen rechteckigen Umriss auf, wie dies typischerweise bei Banknoten der Fall ist. In einer vorteilhaften Ausgestaltung ist der Verschweißbereich als ein Schweißpunkt an einer Ecke oder als jeweils ein Schweißpunkt an mehreren, vorzugsweise allen Ecken des Wertdokumentes ausgebildet. Dies gestattet ein sicheres taktiles und/oder optisches Wahrnehmen der Ecke oder gegebenenfalls der Ecken des Wertdokuments. Alternativ können auch mehrere Schweißpunkte an der Kante des Wertdokumentes im Bereich der Ecken vorgesehen sein. Weiter alternativ kann der Verschweißbereich als linienförmiger Bereich entlang einer oder mehrerer Kanten des Wertdokumentes ausgebildet sein. Beispielsweise kann ein linienförmiger Schweißbereich an den Kanten des Wertdokumentes im Bereich der Ecken oder abschnittsweise an einer oder mehreren Kanten in von den Ecken beabstandeten Bereichen vorgesehen sein. Besonders bevorzugt ist der Verschweißbereich auf dem Wertdokument umlaufend ausgebildet und umfasst alle Ecken und Kanten des Wertdokumentes. Ein solches Vorsehen des Verschweißbereichs an den Ecken und/ oder Kanten des Wertdokumentes erhöht die Spaltfestigkeit des Wertdokumentes. Ist in der mehrschichtigen Anordnung des Wertdokumentes zusätzlich eine Substanz vorgesehen, die den oben beschriebenen Farbumschlag zeigt, so werden dadurch nicht nur die erwähnten Vorteile erzielt, sondern auch die Wahrnehmbarkeit des Umrisses des Wertdokumentes zusätzlich unterstützt. In allen Ausgestaltungen können die z.B. durch Laserstrahlung oder Ultraschall erzeugten Verschweißbereiche darüber hinaus für ein attraktives Design genutzt werden, gegebenenfalls in Verbindung mit einem Aufdruck oder anderen Sicherheitsmerkmalen.

Häufig werden Wertdokumente, wie Banknoten, in Form von Bogen, so genannten Mehrnutzen-Bogen, hergestellt, in denen mehrere Wertdokumente nebeneinander angeordnet sind. Ein einzelnes Wertdokument wird dann aus einem solchen Bogen herausgetrennt, beispielsweise herausgeschnitten. In einer vorteilhaften Ausgestaltung dieses Verfahrens umfasst der Bogen die erfindungsgemäßen ersten und zweiten Schichten und das Heraustrennen eines Wertdokumentes geschieht durch Laser- oder Ultraschallschweißen derart, dass die erste und die zweite Schicht zugleich an den durch das Heraustrennen entstehenden Kanten des Wertdokumentes miteinander verschweißen. Der entstehende Verschweißbereich bildet somit den Rand, das heißt die Kante des Wertdokumentes. Da das Heraustrennen des Wertdokuments aus einem solchen Bogen im gleichen Arbeitsschritt erfolgt wie das Verschweißen der ersten und zweiten Schicht, liegt der Verschweißbereich perfekt registerhaltig zu der Kante des Umrisses des Wertdokumentes. Diese Registerhaltigkeit von Kante und Verschweißbereich bildet wiederum ein Sicherheitsmerkmal, das leicht überprüft und nur schwer nachgeahmt werden kann. Zusätzlich wird durch das Vorsehen des Verschweißbereichs an der Kante des Umrisses des Wertdokuments, das Wertdokument seitlich verschlossen und die Spaltfestigkeit erhöht.

Vorzugsweise umfasst die mehrschichtige Anordnung des Wertdokumentes auch eine Substanz, die einen wie oben beschriebenen Farbumschlag durch das Laser- oder Ultraschallschweißen beim Heraustrennen des Wertdokuments aus dem Bogen zeigt, wodurch die Kante des Wertdokumentes, der Verschweißbereich und der Bereich des Farbumschlages perfekt registerhaltig zueinander angeordnet sind. Dies bildet ein Sicherheitsmerkmal mit weiter erhöhter Fälschungssicherheit.

Wie bereits beschrieben, gestattet das Laser- oder Ultraschallschweißen ein gezieltes Verschweißen innen liegender Schichten. Dabei sind zumindest in Betrachtungsrichtung, aus der das Wertdokument zu betrachten ist, vor der ersten und zweiten Schicht liegende weitere Schichten derart ausgebildet, dass die Wahrnehmbarkeit des durch den Verschweißbereich und gegebenenfalls den Bereich des Farbumschlags gebildeten Erkennungs- oder Sicherheitsmerkmals nicht oder nur unwesentlich beeinträchtigt wird. Dies kann dadurch erreicht werden, dass die weiteren Schichten ausreichend dünn sind, so dass die taktile Charakteristik des Verschweißbereichs weiterhin erkannt werden kann, oder dass die weiteren Schichten ausreichend transparent sind, so dass die optische Charakteristik des Verschweißbereichs und/oder gegebenenfalls des Farbumschlagbereichs weiterhin erkannt werden kann. Solche weiteren Schichten können zeitlich vor oder nach dem Verschweißen oberhalb oder unterhalb der ersten und zweiten Schichten angeordnet werden.

In einer bevorzugten Ausgestaltung ist das Wertdokument, das die erfindungsgemäße mehrschichtige Anordnung umfasst, eine Folienverbundbanknote, die entweder einen Papierkern mit beidseitiger Kunststofffolienbeschichtung oder einen Kunststofffolienkern mit beidseitiger Papierbeschichtung umfasst. Die erste und/oder zweite Schicht können dabei das Substrat des Wertdokumentes, eine Beschichtung des Substrats oder ein sonstiges auf dem Wertdokument angeordnetes Element, insbesondere ein Folienelement wie ein Folienstreifen, ein Patch oder ein Sicherheitsfaden sein. Dabei ist eine Vielzahl von Varianten möglich, von denen die nachfolgenden Figuren und bevorzugten Ausführungsbeispiele nur Beispiele darstellen.

Ausführungsbeispiele und Vorteile der Erfindung werden nachfolgend beispielhaft anhand der begleitenden Figuren erläutert. Die Beispiele stellen bevorzugte Ausführungsformen dar, die die Erfindung in keiner Weise beschränken. Die gezeigten Figuren sind schematische Darstellungen, die die realen Proportionen nicht widerspiegeln, sondern einer verbesserten Anschaulichkeit der verschiedenen Ausführungsbeispiele dienen.

Im Einzelnen zeigen die Figuren:
- Fig. 1: eine Folienverbundbanknote in Draufsicht;
- Fig. 2: einen ersten Querschnitt durch die Folienverbundbanknote;
- Fig. 3: einen Querschnitt durch eine weiteres Ausführungsbeispiel der Folienverbundbanknote;
- Figuren 4 bis 6: verschiedene Querschnitte durch die Folienverbundbanknote;
- Figuren 7a bis 7c: Draufsichten auf verschiedene Ausführungsbeispiele eines Lochbereichs der Folienverbundbanknote;
- Figuren 8 bis 10: verschiedene Querschnitte durch die Folienverbundbanknote;
- Figuren 11a bis 11e: Draufsichten auf verschiedene Ausführungsbeispiele eines abgedeckten Lochbereichs der Folienverbundbanknote; und
- Fig. 12: einen Querschnitt durch einen Randbereich der Folienverbundbanknote.

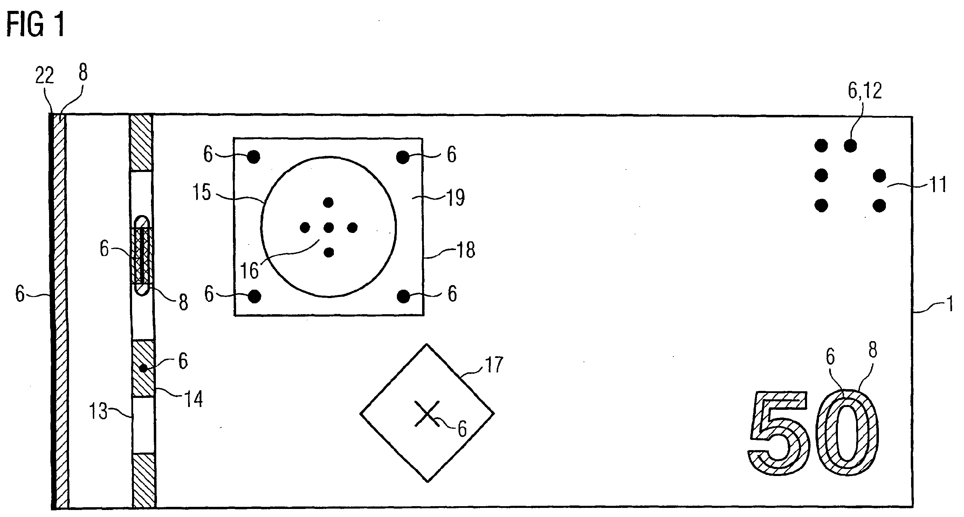

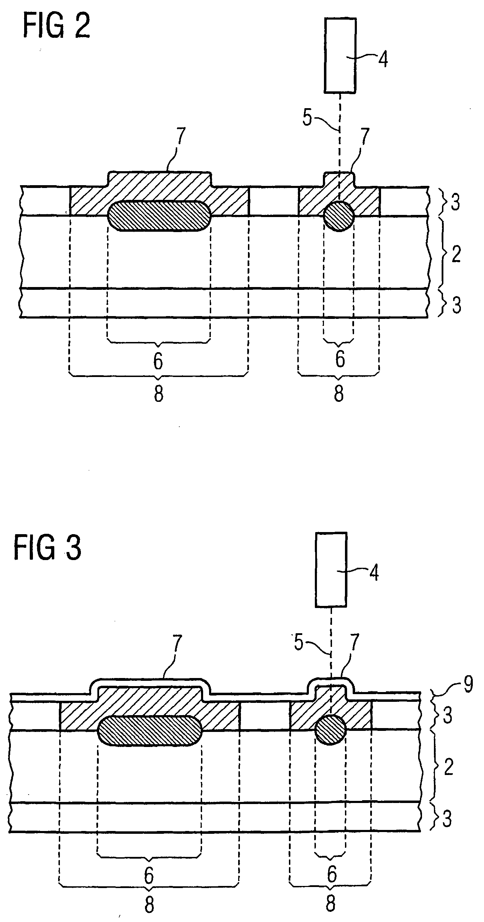

In Fig. 1 ist als Wertdokument eine Folienverbundbanknote 1 in Draufsicht dargestellt. In Fig. 2 ist ein Querschnitt durch die Folienverbundbanknote 1 dargestellt. Die Folienverbundbanknote 1 enthält als Kern eine Papierschicht 2 aus Baumwollpapier, welche beidseitig mit jeweils einer transparenten Kunststofffolie 3 aus PET beschichtet ist. An der in Fig. 1 rechten unteren Ecke der Folienverbundbanknote 1 ist die Denomination "50" dargestellt. Der in Fig. 2 dargestellte Querschnitt ist ein Querschnitt dieses Bereichs. In diesem Bereich ist die Papierschicht 2 und die oben liegende Kunststofffolienbeschichtung 3 mithilfe eines Lasers 4, der eine Laserstrahlung 5 abgibt, in einem Verschweißbereich 6 miteinander verschweißt. Der Verschweißbereich besteht aus zwei linienförmigen Bereichen, die jeweils eine Breite von ca. 50 µm bis ca. 500 µm, typischerweise von ca. 100 µm aufweisen. Wie in Fig. 2 dargestellt, ergibt sich durch das Verschweißen in dem Verschweißbereich 6 eine feste Verbindung zwischen der oberen Kunststofffolie 3 und der Papierschicht 2, sowie eine Erhebung 7 auf der Oberfläche der oberen Kunststofffolie 3 und somit auf der Oberfläche der Folienverbundbanknote 1. Die Erhebung 7 bildet ein taktiles Merkmal, das durch einen Benutzer ertastet oder maschinell detektiert werden kann. Der Laser 4 ist ein Nd:YAG- oder ein Nd:YVO₄-Laser, der eine Laserstrahlung 5 mit einer Wellenlänge von 1064 nm abgibt. Diese Laserstrahlung tritt durch die Kunststofffolie 3 ungehindert hindurch, wird von der Papierschicht 2 jedoch absorbiert, so dass an der Grenzfläche zwischen Kunststofffolie 3 und Papierschicht 2 ein Verschweißen der beiden Schichten auftritt. Dazu enthält die Papierschicht 2 geeignete laserabsorbierende Substanzen.

Die obere Kunststofffolie 3 umfasst weiterhin eine thermosensitive Substanz, die oberhalb einer Umschlagstemperatur einen Farbumschlag von transparent zu farbig zeigt, so dass die vor dem Verschweißen transparente Kunststofffolie 3 in dem Farbumschlagsbereich 8 eine optisch wahrnehmbare Farbe zeigt. Die Umschlagstemperatur der thermosensitiven Substanz liegt dabei unterhalb der Temperatur, die beim Verschweißen der Kunststofffolie 3 mit der Papierschicht 2 auftritt, so dass der Farbumschlag der thermosensitiven Substanz in der Kunststofffolie 3 nicht nur im Verschweißbereich 6 auftritt, sondern auch in einem Bereich 8 um den Verschweißbereich 6 herum. Im vorliegenden Ausführungsbeispiel weist dieser Farbumschlagbereich 8 eine Breite von etwa 250 µm bis etwa 500 µm um den Verschweißbereich 6 herum auf. Somit kann die Denomination "50" der Folienverbundbanknote 8 nicht nur taktil, sondern auch optisch erkannt werden.

In Fig. 3 ist ein alternativer Aufbau der Folienverbundbanknote im Querschnitt dargestellt. Dabei ist die Papierschicht 2 neben der Kunststofffolie 3 mit einer weiteren Kunststofffolie 9 beschichtet. Die weitere Kunststofffolie 9 ist derart ausgebildet, dass die sich durch den Verschweißbereich 6 ergebende Erhebung 7 auch auf der Oberfläche der weiteren Folienschicht 9 vorliegt. Dazu ist die weitere Folienschicht 9 beispielsweise ausreichend dünn ausgebildet und/oder aus einem ausreichend flexiblen Material gebildet. Weiterhin ist die weitere Kunststofffolie 9 ausreichend transluzent, beispielsweise vollständig transparent, so dass der Farbumschlagsbereich 8 bei Betrachtung der Folienverbundbanknote durch die weitere Kunststofffolienschicht 9 hindurch sichtbar ist. Die weitere Kunststofffolienschicht 9 kann zeitlich vor oder nach dem Laserschweißen auf der Kunststofffolienschicht 3 angeordnet werden.

Wie in Fig. 3 dargestellt, kann der Verschweißbereich nur die Grenzfläche zwischen der Kunststofffolie 3 und der Papierschicht 2 umfassen. Durch geeignete Wahl der Parameter beim Verschweißen und gegebenenfalls durch geeignete Wahl der Eigenschaften der Papierschicht 2 und der Kunststofffolien 3 und 9 kann der Verschweißbereich auch derart gewählt werden, dass der Verschweißbereich die Kunststofffolie 3 vollständig umfasst und gegebenenfalls zusätzlich die Kunststofffolie 9 teilweise oder vollständig umfasst. Somit kann auch ein Verschweißen von mehreren Kunststofffolien mit dem Papiersubstrat 2 realisiert werden. Erstreckt sich der Verschweißbereich 9 bis zur Oberfläche der Folienverbundbanknote, so ergibt sich im Verschweißbereich 6 nicht nur eine Erhebung 7, sondern auch eine veränderte Oberflächenstruktur, die die haptische Wahrnehmbarkeit der Erhebung 7 unterstützt.

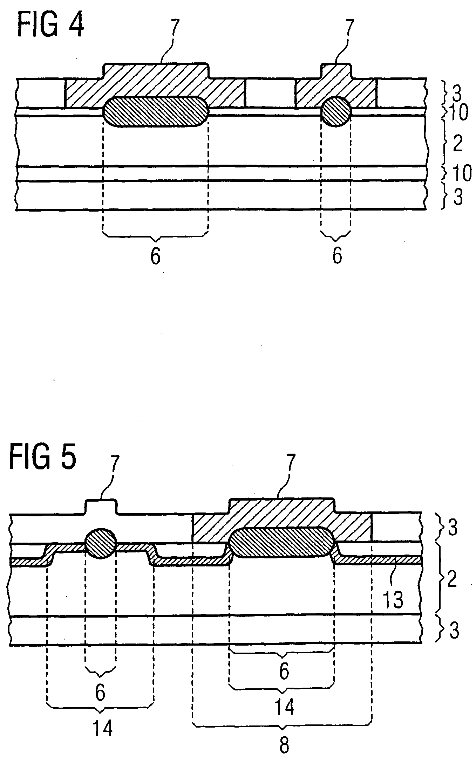

In Fig. 4 ist ein weiterer alternativer Aufbau der Folienverbundbanknote 1 im Querschnitt dargestellt. Dabei umfasst die Papierschicht 2 eine Beschichtung 10, die eine Zwischenschicht zwischen der Papierschicht 2 und der Kunststofffolie 3 bildet. Die Beschichtung 10 ist in dem dargestellten Ausführungsbeispiel ein Lack, dem eine laserabsorbierende Substanz zugesetzt ist. Entsprechend wird die beim Laserschweißen einfallende Laserstrahlung 5 in der Zwischenschicht 10 absorbiert, was zu einem gezielten Verschweißen der Papierschicht 2 mit der Kunststofffolienschicht 3 an deren Grenzfläche führt. In der in Fig. 1 rechts oben dargestellten Ecke der Folienverbundbanknote 1 ist ein Bereich 11 mit mehreren Schweißpunkten 12 dargestellt. In diesem Bereich 11 ist wiederum die obere Kunststofffolie 3 mit der Papierschicht 2 verschweißt und der Verschweißbereich 6 wie auf der rechten Seite in Fig. 2 dargestellt. Eine thermosensitive Substanz liegt in diesem Bereich jedoch nicht vor. Die Verschweißpunkte 12 des Bereichs 11 bilden eine Blindenschrift, die die Denomination der Folienverbundbanknote 1 angibt. Dieser Verschweißbereich bildet somit ein denominationsspezifisches Erkennungsmerkmal der Folienverbundbanknote 1.

In Fig. 1 ist im linken Bereich der Folienverbundbanknote 1 ein Sicherheitsfaden 13 dargestellt, der in Bereichen 14 an die Oberfläche der Papierschicht 2 tritt und durch die transparente PET-Kunststofffolie 3 wahrgenommen werden kann. In Fig. 5 ist ein Querschnitt der Folienverbundbanknote entlang des Sicherheitsfadens 13 dargestellt. Der Sicherheitsfaden 13 ist ein Folienstreifen, der in die Papierschicht 2 der Kunststofffolie 1 eingearbeitet ist, und wie dargestellt in Bereichen 14 an die Oberfläche der Papierschicht 2 tritt. Außerhalb der Bereiche 14 verläuft der Sicherheitsfaden 13 im Inneren der Papierschicht 2. In dem dargestellten Ausführungsbeispiel handelt es sich somit um einen Fenstersicherheitsfaden. Alternativ kann der Sicherheitsfaden auch als Pendelsicherheitsfaden ausgebildet sein, bei dem der Sicherheitsfaden 13 abwechselnd an der oberen und unteren Oberfläche der Papierschicht 2 verläuft. Die Papierschicht 2 ist mit einer Kunststofffolie 3 beschichtet. In den Bereichen 14, in denen der Sicherheitsfaden 13 an die Oberfläche der Papierschicht 2 tritt, sind somit der Sicherheitsfaden 13 und die Kunststofffolie 3 direkt aufeinander angeordnet. In diesem Bereich können die Kunststofffolie 3 und der Sicherheitsfaden 13 miteinander verschweißt werden. Der Verschweißbereich 6, in dem der Sicherheitsfaden 13 und die Kunststofffolie 3 miteinander verschweißt sind, kann einen Bereich 14 vollständig umfassen, wie dies auf der rechten Seite in Fig. 5 dargestellt ist. Der Verschweißbereich 6 kann jedoch auch nur einen Teilbereich eines Bereichs 14, in dem der Sicherheitsfaden 13 an die Oberfläche der Papierschicht 2 tritt, umfassen, wie dies auf der linken Seite in Fig. 5 dargestellt ist. Durch das Verschweißen der Kunststofffolie 3 mit dem Sicherheitsfaden 13 wird ein zerstörungsfreies Ablösen der Kunststofffolie 3 von der Folienverbundbanknote 1 verhindert. Wie auf der rechten Seite in Fig. 5 dargestellt ist, kann die Kunststofffolie 3 wiederum eine Substanz umfassen, die infolge des Verschweißens einen Farbumschlag zeigt. Ist der Verschweißbereich 6 mit dem Bereich 14, in dem der Sicherheitsfaden 13 an die Oberfläche der Papierschicht 2 tritt, identisch, so ist der Bereich des Farbumschlags 8 nicht nur registerhaltig mit dem Verschweißbereich 6 ausgebildet, sondern auch mit dem Bereich 14. Diese registerhaltige Anordnung zwischen den Bereichen 14, in denen der Sicherheitsfaden 13 an die Oberfläche der Papierschicht 3 tritt und somit beispielsweise im Auflicht sichtbar ist, und dem Farbumschlagbereich 8 kann durch einen Benutzer leicht überprüft werden, von einem Fälscher jedoch nur schwer nachgeahmt werden.

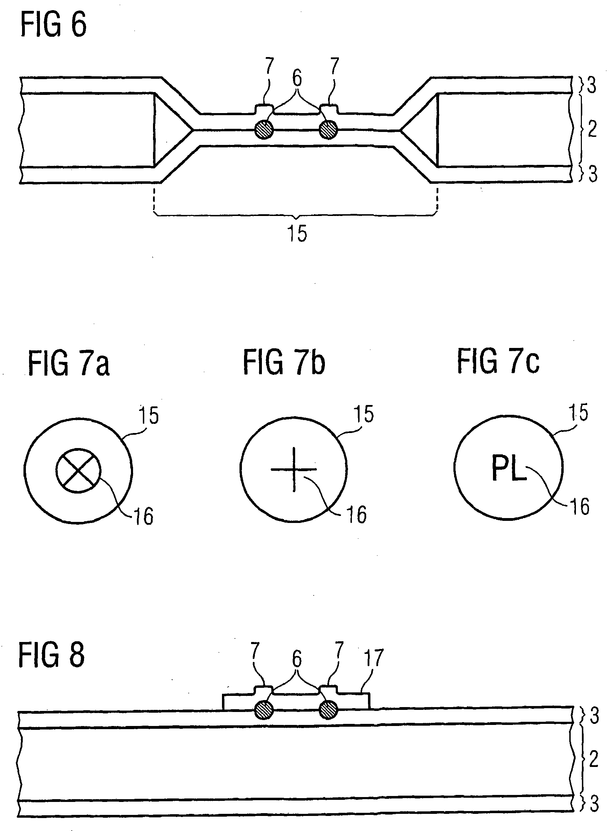

In der Folienverbundbanknote 1 kann weiterhin eine durchgehende Ausnehmung 15 in Form eines Lochs vorgesehen sein, wie dies in Fig. 1 in Draufsicht dargestellt ist. Dieser Bereich der Folienverbundbanknote 1 ist in Fig. 6 im Querschnitt dargestellt. Das Loch 15 kann wie in Fig.1 dargestellt kreisrund sein oder jede andere Form aufweisen, beispielsweise dreieckig, viereckig, rechteckig, quadratisch, sechseckig, achteckig oder auch elliptisch sein. Die Kunststofffolien 3, mit denen die Papierschicht 2 beidseitig beschichtet ist, erstrecken sich über das Loch 15 hinweg. In diesem Bereich liegen die Kunststofffolien 3 aufgrund der fehlenden Papierschicht 2 direkt aufeinander und schließen das Loch 15. In einem Bereich 16 des Lochs 15 sind punkt- oder linienförmige Schweißpunkte oder -nähte 12 vorgesehen und der entstehende Verschweißbereich 6 bildet einen Teilbereich des Lochs 15. In einer nicht dargestellten Ausführungsform umfasst der Verschweißbereich 6 das Loch vollständig. Wie in Fig. 1 bereits angedeutet, besteht der Verschweißbereich 6 innerhalb des Lochs 15 aus mehreren punkt- oder linienförmigen Bereichen, beispielsweise Schweißpunkten oder Schweißnähten 12, die eine Information 16 für den Benutzer der Folienverbundbanknote 1 darstellen. Die Information 16 kann beispielsweise eine charakteristische Anordnung von Schweißpunkten sein, wie in Fig. 1 dargestellt, oder ein sonstiges charakteristisches Zeichen, Buchstaben, Zahlen, Ziffern, ein Bild, eine Blindenschrift oder ein sonstiges Muster mit einem Wiedererkennungswert. Beispiele solcher Informationen sind in den Figuren 7a bis 7c dargestellt.

Die in Fig. 1 dargestellte Folienverbundbanknote 1 trägt in einem unteren Bereich einen Folienstreifen 17, der als Patch ausgebildet ist. Dieser Bereich der Folienverbundbanknote 1 ist in Fig. 8 im Querschnitt dargestellt. Der Patch 17 ist direkt auf der Kunststofffolie 3 angeordnet. Der Patch ist mit der Kunststofffolie 3 der Folienverbundbanknote 1 verschweißt, wie dies durch die Verschweißbereiche 6 in Fig. 8 dargestellt ist. Durch das Verschweißen des Patches 17 auf der Kunststofffolie 3 wird zum einen eine verbesserte Haftung von Patch 17 auf der Folienverbundbanknote 1 sichergestellt, die aufgrund des Verschweißens von Patch 17 und Kunststofffolie 3 über die Haftung, die durch ein Verkleben oder Kaschieren möglich ist, hinausgeht. Zum anderen wird durch das Verschweißen von Patch 17 und Kunststofffolie 3 ein zerstörungsfreies Ablösen von Patch 17 von der Kunststofffolie 3 verhindert.

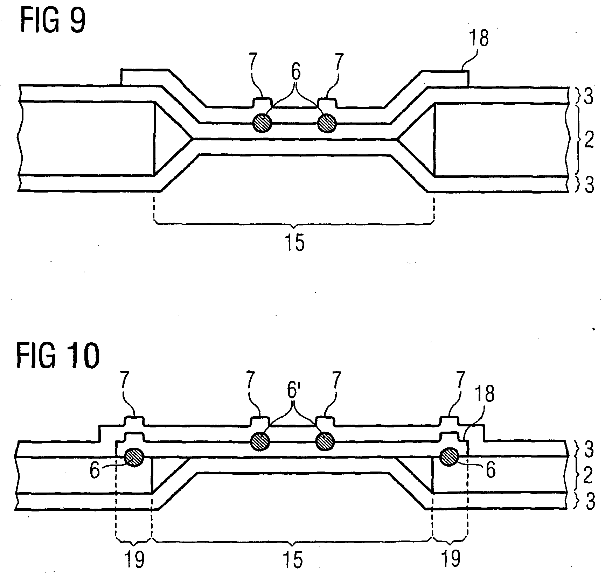

Das in Fig.1 dargestellte Loch 15 kann, wie dargestellt, zusätzlich durch ein weiteres Folienelement 18 in Form eines weiteren Patchs überdeckt sein. Dieser Bereich der Folienverbundbanknote 1 ist in Fig. 9 im Querschnitt dargestellt. Patch 18 ist direkt auf der Kunststofffolie 3 angeordnet und überlappt dabei das Loch 15 der Papierschicht 2. Im Bereich des Lochs 15 ist der Patch 18 in einem Verschweißbereich 6 mit der Kunststofffolie 3 verschweißt. Dadurch wird die Kunststofffolie 3 im Bereich des Lochs 15 mechanisch stabilisiert. Der Verschweißbereich 6 kann dabei eine Information 16 bilden, wie sie in den Figuren 7a bis 7c dargestellt ist.

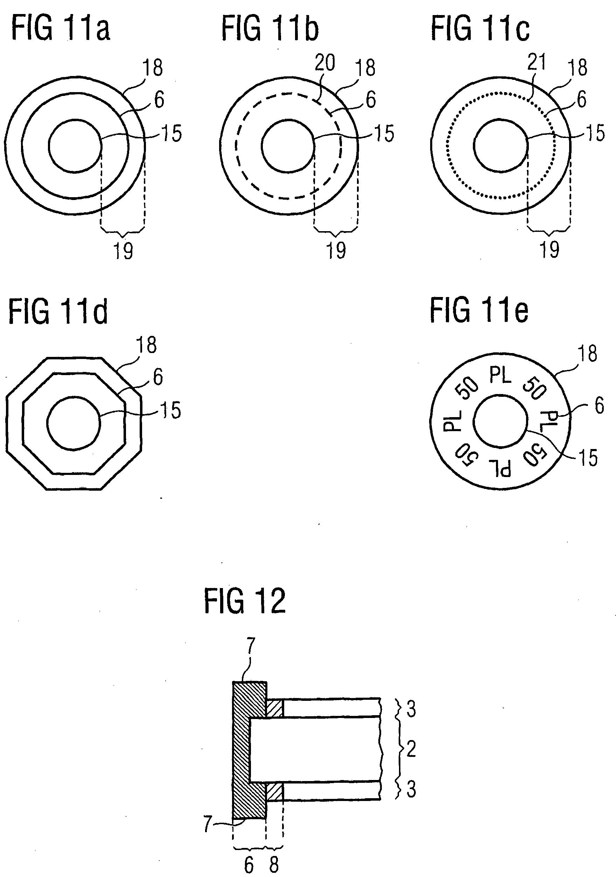

In Fig. 10 ist eine alternative Ausführungsform der Folienverbundbanknote 1 dargestellt. Das Papiersubstrat 2 weist wiederum eine durchgehende Ausnehmung 15 in Form eines Lochs auf. Dieses Loch 15 wird durch den Folienstreifen 18 in Form eines Patches vollständig überdeckt. Dabei ist der Patch 18 in Randbereichen 19 um das Loch 15 herum direkt auf der Papierschicht 2 angeordnet. In dem Randbereich 19 ist der Patch 18 mit der Papierschicht 2 verschweißt. Im Ausführungsbeispiels besteht der Verschweißbereich 6 aus mehreren Schweißpunkten. Zusätzlich kann, wie in Fig. 10 dargestellt, die Papierschicht 2 und der Patch 18 durch Kunststofffolien 3 beschichtet werden. Der Patch 18 kann die gleiche Umrissform wie die durchgehende Ausnehmung 15 aufweisen. Der Umriss von Patch 18 kann jedoch auch unabhängig von dem Umriss der durchgehenden Ausnehmung 15 gewählt werden, wie dies beispielsweise in Fig. 1 dargestellt ist, in der die durchgehende Ausnehmung 15 kreisförmig ist und Patch 18 quadratisch ausgebildet ist. Weitere Ausführungsbeispiele sind in den Figuren 11a bis 11e dargestellt.

In den in den Figuren 11a bis 11e dargestellten Ausführungsbeispielen ist die durchgehende Ausnehmung 15 in der Papierschicht 2 jeweils kreisförmig ausgebildet. In den in Figuren 11a bis 11c dargestellten Ausführungsbeispielen ist der Patch 18 ebenfalls kreisförmig ausgebildet und konzentrisch zu dem Loch 15 auf der Folienverbundbanknote 1 angeordnet. In dem dadurch entstehenden ringförmigen Randbereich 19, in dem der Patch 18 direkt auf der Papierschicht 2 der Folienverbundbanknote angeordnet ist, ist ein Verschweißbereich 6 vorgesehen, in welchem der Patch 18 mit der Papierschicht 2 verschweißt ist. In dem in Fig. 11a dargestellten Ausführungsbeispiel bildet der Verschweißbereich 6 eine durchgehende, kreisförmige Linie, die konzentrisch zu den Umrissen von Loch 15 und Patch 18 verläuft. In dem in Fig.11b dargestellten Ausführungsbeispiel wird der Verschweißbereich 6 durch Kreisbogensegmente 20 gebildet, die sich auf einer Kreislinie befinden, die konzentrisch zu den Umrissen von Loch 15 und Patch 18 verläuft. In dem in Fig. 11c dargestellten Ausführungsbeispiel ist der Verschweißbereich 6 durch Schweißpunkte 21 gebildet, die sich auf einer Kreislinie befinden, welche konzentrisch zu den Umrissen von Loch 15 und Patch 18 verläuft. In dem in Fig. 11d dargestellten Ausführungsbeispiel ist der Patch 18 ein achteckiges Element. Der Verschweißbereich 6 bildet dabei eine durchgehende Linie, die einen gleichbleibenden Abstand von dem Umriss des Patchs 18 aufweist und somit ebenfalls eine achteckige Form besitzt. Generell ist es vorteilhaft, wenn der Verschweißbereich 6 in der Nähe des Umrisses des Patches 18 verläuft, da in diesem äußeren Randbereich von Patch 18 die Anforderungen an die Spaltfestigkeit zwischen Patch 18 und dem Papiersubstrat 2 am höchsten sind. In dem in Fig.11e dargestellten Ausführungsbeispiel ist der Verschweißbereich 6 in dem Randbereich 19 in Form von Buchstaben und Zahlen ausgebildet. Somit bildet der Verschweißbereich 6 eine Information für einen Betrachter, welche haptisch und/oder visuell wahrgenommen werden kann. In einer nicht dargestellten Ausführungsform fällt der Verschweißbereich 6 mit dem Rand von Patch 18 zusammen.

Die in Fig. 10 dargestellte Abdeckung eines Lochs 15 mithilfe eines Patchs 18 löst Probleme, die das Vorhandensein eines Lochs 15 in dem Papiersubstrat 2 bei der Schaffung einer Folienverbundbanknote, das heißt beim beidseitigen Aufbringen einer Kunststofffolie 3 schafft. Bei einem nicht abgedeckten Loch 15 führt das beidseitige Aufbringen eines Kaschierklebers für die Kunststofffolien 3 auf die Papierschicht 2 (Duplex-Kaschierung) in der Kaschiervorrichtung und in der sich anschließenden Aufwicklungsvorrichtung zum Durchdrücken des Kaschierklebers im Bereich des Lochs 15 und zum entsprechenden Ablegen des Kaschierklebers auf der jeweiligen Gegenseite. Die in der Fig. 10 gezeigte Lochabdeckung mithilfe eines Patches 18, die das Loch 15 verschließt, verhindert dies und eine Duplex-Kaschierung der Papierschicht 2 mit abgedecktem Loch 15 weist die oben angesprochenen Probleme nicht mehr auf. Dabei weist jedoch der Patch 18 meist eine nur geringe Haftung mit der Kunststofffolie 3 auf, da hier gegebenenfalls ein Kaschierkleber und ein thermoplastischer Heißsiegelkleber aufeinander zu liegen kommen. Durch das Vorsehen zusätzlicher Verschweißbereiche 6' innerhalb von Loch 15 zwischen Patch 18 und Kunststofffolie 3 wird die Haftung dieser beiden Schichten erhöht.

Am linken Rand der in Fig. 1 dargestellten Folienverbundbanknote 1 ist eine Schweißnaht 22 entlang der Kante der Folienverbundbanknote 1 dargestellt. In Fig. 12 ist dieser Randbereich, das heißt der Schnitt durch die Schweißnaht 22, dargestellt. Die Folienverbundbanknote 1 umfasst eine Papierschicht 2 und beidseitig jeweils Kunststofffolienschichten 3. Die beidseitigen Folienschichten 3 sind im Randbereich der Folienverbundbanknote 1 durch die Schweißnaht 22 miteinander verschweißt. Die Schweißnaht 22 bildet einen weiteren Verschweißbereich 6. Eine solche Schweißnaht kann beim Heraustrennen der Folienverbundbanknote 1 aus einem Mehrnutzen-Bogen mit einer Vielzahl von Folienverbundbanknoten geschehen oder durch nachträgliches Bearbeiten der Kante der Folienverbundbanknote 1. Wie in Fig. 12 dargestellt, sind die auf der Papierschicht beidseitig angeordneten Kunststofffolienschichten 3 miteinander verschweißt. Durch den Verschweißbereich 6 wird die Folienverbundbanknote 1 somit seitlich verschlossen. Dadurch wird die Spaltfestigkeit der Folienverbundbanknote 1 erhöht. In dem dargestellten Ausführungsbeispiel ist weiterhin eine Erhebung 7 dargestellt, die durch das Verschweißen der Kunststofffolien 3 entsteht und somit registerhaltig zu dem Verschweißbereich 6 und dem Rand der Folienverbundbanknote 1 angeordnet ist. Dadurch kann der Randbereich der Folienverbundbanknote haptisch gut wahrgenommen werden. Die Registerhaltigkeit der Erhebung 7 zu der Kante der Folienverbundbanknote 1 bildet ein leicht wahrnehmbares Sicherheitsmerkmal.

Zusätzlich ist in den Kunststofffolienschichten 3 eine Substanz vorgesehen, die infolge des Verschweißens der Kunststofffolien 3 einen Farbumschlag zeigt. Dieser tritt in einem Farbumschlagbereich 8 auf, der eine vorgegebene Breite aufweist. Somit liegt der Farbumschlagsbereich 8 ebenfalls registerhaltig zu dem Verschweißbereich 6, der Erhebung 7 und dem Rand der Folienverbandbanknote 1, was ein weiteres leicht überprüfbares und schwer nachahmbares Sicherheitsmerkmal schafft.

Wie in Fig. 1 bereits angedeutet, können die verschiedenen Ausführungsbeispiele und Möglichkeiten in einer mehrschichtigen Anordnung für Wertdokumente, wie Folienverbundbanknoten, zwei Schichten und eine Zwischenschicht aus Papier miteinander durch Verschweißen zu verbinden, miteinander kombiniert werden.

## Patentansprüche

1. Mehrschichtige Anordnung für ein Wertdokument, umfassend eine erste Schicht, die aus einer Kunststofffolie besteht, und eine zweite Schicht, die aus einer weiteren Kunststofffolie besteht, wobei die Kunststofffolien durch eine oder gegebenenfalls mehrere Zwischenschichten aus Papier getrennt sind, **dadurch gekennzeichnet, dass** die Kunststofffolien zumindest in einem Überlappungsbereich übereinander angeordnet sind und zumindest ein Teilbereich des Überlappungsbereichs einen Verschweißbereich bildet, in welchem die erste und zweite Kunststofffolie derart miteinander verschweißt sind, dass der Verschweißbereich ein taktil und/ oder optisch wahrnehmbares Erkennungs- oder Sicherheitsmerkmal bildet.

2. Mehrschichtige Anordnung nach Anspruch 1, **dadurch gekennzeichnet, dass** die erste und/oder die zweite Schicht durch eine der folgenden Alternativen gebildet werden:
- ein Folienelement, insbesondere ein Patch, ein Folienstreifen oder ein Sicherheitsfaden,
- ein Substrat des Wertdokuments, insbesondere ein Substrat mit einer durchgehenden Aussparung,
- eine Beschichtung des Substrats des Wertdokuments, insbesondere in Form eines Folienelements.

3. Mehrschichtige Anordnung nach einem der vorhergehenden Ansprüche, **dadurch gekennzeichnet, dass** die erste und zweite Schicht durch Anwendung einer Schweißtechnik, vorzugsweise durch Laser- oder Ultraschallschweißen, miteinander verschweißt sind.

4. Mehrschichtige Anordnung nach einem der vorhergehenden Ansprüche, **dadurch gekennzeichnet, dass** der Verschweißbereich aus einem oder mehreren punkt- oder linienförmigen Bereichen besteht und der Verschweißbereich vorzugsweise eine Information bildet.

5. Mehrschichtige Anordnung nach einem der vorhergehenden Ansprüche, **dadurch gekennzeichnet, dass** die erste Schicht und/ oder die zweite Schicht und/oder gegebenenfalls die Zwischenschicht lasersensitiv und/oder ultraschallsensitiv und/ oder thermosensitiv ist.

6. Mehrschichtige Anordnung nach einem der vorhergehenden Ansprüche, **dadurch gekennzeichnet, dass** der Verschweißbereich eine Ecke oder wenigstens abschnittsweise eine Kante der mehrschichtigen Anordnung umfasst und bevorzugt auf der mehrschichtigen Anordnung vollständig umlaufend ausgebildet ist.

7. Wertdokument, insbesondere Folienverbundbanknote oder Folienverbundbanknoten-Bogen, umfassend eine mehrschichtige Anordnung nach einem der Ansprüche 1 bis 6.

8. Verfahren zum Herstellen einer mehrschichtigen Anordnung für ein Wertdokument, umfassend die Schritte:
- Bereitstellen einer ersten Schicht, die aus einer Kunststofffolie besteht,
- Anordnen einer zweiten Schicht, die aus einer weiteren Kunststofffolie besteht, auf der ersten Schicht, sodass die Schichten zumindest einen Überlappungsbereich aufweisen, wobei die Kunststofffolien durch eine oder gegebenenfalls mehrere Zwischenschichten aus Papier getrennt sind, und
- Verschweißen der ersten und der zweiten Schicht in einem Verschweißbereich, der zumindest einen Teilbereich des Überlappungsbereichs bildet, derart, dass der Verschweißbereich ein taktil und/oder optisch wahrnehmbares Erkennungs- oder Sicherheitsmerkmal bildet.

9. Verfahren nach Anspruch 8, **dadurch gekennzeichnet, dass** die erste und/oder die zweite Schicht durch eine der folgenden Alternativen gebildet werden:
- ein Folienelement, insbesondere ein Patch, ein Folienstreifen oder ein Sicherheitsfaden,
- ein Substrat des Wertdokuments, insbesondere ein Substrat mit einer durchgehenden Aussparung,
- eine Beschichtung des Substrats des Wertdokuments, insbesondere in Form eines Folienelements.

10. Verfahren nach Anspruch 8 oder 9, **dadurch gekennzeichnet, dass** das Verschweißen der ersten und zweiten Schicht durch Anwendung einer Schweißtechnik, vorzugsweise durch Laser- oder Ultraschallschweißen, geschieht.

11. Verfahren nach einem Ansprüche 8 bis 10, **dadurch gekennzeichnet, dass** der Verschweißbereich aus einem oder mehreren punkt- oder linienförmigen Bereichen besteht und der Verschweißbereich vorzugsweise eine Information bildet.

12. Verfahren nach einem Ansprüche 8 bis 11, **dadurch gekennzeichnet, dass** die erste Schicht und/ oder die zweite Schicht und/ oder gegebenenfalls die Zwischenschicht lasersensitiv und/oder ultraschallsensitiv und/ oder thermosensitiv ist.

13. Verfahren nach einem Ansprüche 8 bis 12, **dadurch gekennzeichnet, dass** der Verschweißbereich eine Ecke oder wenigstens abschnittsweise eine Kante der mehrschichtigen Anordnung umfasst, und bevorzugt auf der mehrschichtigen Anordnung vollständig umlaufend ausgebildet ist.

14. Verfahren nach einem Ansprüche 8 bis 13, **dadurch gekennzeichnet, dass** beim Verschweißen der ersten und der zweiten Schicht das mehrschichtige Substrat zusätzlich vollständig durchtrennt wird, so dass der Verschweißbereich die Kante des mehrschichtigen Substrats umfasst, und vorzugsweise die mehrschichtige Anordnung aus einem Bogen, insbesondere Mehrnutzen-Bogen, herausgetrennt wird.

## Claims

1. A multilayer arrangement for a value document, comprising a first layer consisting of a plastic foil and a second layer consisting of a further plastic foil, wherein the plastic foils are separated by one or possibly several intermediate layers of paper, **characterized in that** the plastic foils are arranged above each other at least in an overlap area and at least one partial area of the overlap area forms a welding area in which the first and the second plastic foil are welded to each other in such a fashion that the welding area forms a tactilely and/or optically perceivable recognition or security feature.

2. The multilayer arrangement according to claim 1, **characterized in that** the first and/or the second layer are formed by any one of the following alternatives:
- a foil element, in particular a patch, a foil strip or a security thread,
- a substrate of the value document, in particular a substrate with a continuous gap,
- a coating of the substrate of the value document, in particular in the form of a foil element.

3. The multilayer arrangement according to any of the preceding claims, **characterized in that** the first and second layer are welded to each other by applying a welding method, preferably by laser or ultrasonic welding.

4. The multilayer arrangement according to any of the preceding claims, **characterized in that** the welding area consists of one or several dot-shaped or line-shaped areas and the welding area preferably forms an information item.

5. The multilayer arrangement according to any of the preceding claims, **characterized in that** the first layer and/or the second layer and/or possibly the intermediate layer is laser-sensitive and/or ultrasound-sensitive and/or thermo-sensitive.

6. The multilayer arrangement according to any of the preceding claims, **characterized in that** the welding area comprises a corner or at least in some sections an edge of the multilayer arrangement and is preferably configured completely circumferentially on the multilayer arrangement.

7. A value document, in particular a foil composite banknote or a foil compose banknote sheet, comprising a multilayer arrangement according to any of the claims 1 to 6.

8. A method for manufacturing a multilayer arrangement for a value document, comprising the steps of:
- making available a first layer consisting of a plastic foil,
- arranging a second layer consisting of a further plastic layer on the first layer, such that the layers have at least one overlap area, wherein the plastic foils are separated by one or possibly several intermediate layers of paper, and
- welding the first and the second layer in a welding area which forms at least one partial area of the overlap area, in such a fashion that the welding area forms a tactilely and/or optically perceivable recognition or security feature.

9. The method according to claim 8, **characterized in that** the first and/or the second layer are formed by any one of the following alternatives:
- a foil element, in particular a patch, a foil strip or a security thread,
- a substrate of the value document, in particular a substrate with a continuous gap,
- a coating of the substrate of the value document, in particular in the form of a foil element.

10. The method according to claim 8 or 9, **characterized in that** the welding of the first and second layer is effected by applying a welding method, preferably by laser or ultrasonic welding.

11. The method according to any of the claims 8 to 10, **characterized in that** the welding area consists of one or several dot-shaped or line-shaped areas and the welding area preferably forms an information item.

12. The method according to any of the claims 8 to 11, **characterized in that** the first layer and/or the second layer and/or possibly the intermediate layer is laser-sensitive and/or ultrasound-sensitive and/or thermo-sensitive.

13. The method according to any of the claims 8 to 12, **characterized in that** the welding area comprises a corner or at least in some sections an edge of the multilayer arrangement and is preferably configured completely circumferentially on the multilayer arrangement.

14. The method according to any of the claims 8 to 13, **characterized in that** upon the welding of the first and the second layer the multilayer substrate is additionally severed completely, such that the welding area comprises the edge of the multilayer substrate, and preferably the multilayer arrangement is detached from a sheet, in particular a multi-up sheet.

## Revendications

1. Agencement multicouche pour un document de valeur, comprenant une première couche consistant en un film en matière plastique, et une deuxième couche consistant en un autre film en matière plastique, les films en matière plastique étant séparés par une ou le cas échéant plusieurs couches intermédiaires en papier, **caractérisé en ce que** les films en matière plastique sont, au moins dans une zone de chevauchement, agencés l'un sur l'autre et **en ce qu'**au moins une zone partielle de la zone de chevauchement constitue une zone de soudure dans laquelle le premier et le deuxième film en matière plastique sont soudés ensemble de telle façon que la zone de soudure constitue une caractéristique de reconnaissance ou de sécurité perceptible tactilement et/ou optiquement.

2. Agencement multicouche selon la revendication 1, **caractérisé en ce que** la première et/ou la deuxième couche sont constituées par une des alternatives suivantes :
- un élément formant film, en particulier un patch, un ruban de film ou un fil de sécurité,
- un substrat du document de valeur, en particulier un substrat ayant un évidement continu,
- un revêtement du substrat du document de valeur, en particulier sous forme d'un élément formant film.

3. Agencement multicouche selon une des revendications précédentes, **caractérisé en ce que** la première et la deuxième couche sont soudées ensemble par utilisation d'une technique de soudage, de préférence par soudage au laser ou aux ultrasons.

4. Agencement multicouche selon une des revendications précédentes, **caractérisé en ce que** la zone de soudure est composée d'une ou de plusieurs zones en forme de points ou de lignes et **en ce que** la zone de soudure constitue de préférence une information.

5. Agencement multicouche selon une des revendications précédentes, **caractérisé en ce que** la première et/ou la deuxième couche et/ou le cas échéant la couche intermédiaire est sensible au laser et/ou sensible aux ultrasons et/ou thermosensible.

6. Agencement multicouche selon une des revendications précédentes, **caractérisé en ce que** la zone de soudure comprend un angle ou, au moins par tronçons, un bord de l'agencement multicouche et est réalisée de préférence de manière décrivant entièrement le pourtour sur l'agencement multicouche.

7. Document de valeur, en particulier billet de banque en film composite ou feuille à billets de banque en film composite, comprenant un agencement multicouche selon une des revendications de 1 à6.

8. Procédé de fabrication d'un agencement multicouche pour un document de valeur, comprenant les étapes:
- mise à disposition d'une première couche consistant en un film en matière plastique,
- agencement d'une deuxième couche consistant en un autre film en matière plastique, sur la première couche, de telle façon que les couches comportent au moins une zone de chevauchement, les films en matière plastique étant séparés par une ou le cas échéant plusieurs couches intermédiaires en papier, et
- soudage de la première et de la deuxième couche dans une zone de soudure constituant au moins une zone partielle de la zone de chevauchement, de telle façon que la zone de soudure constitue une caractéristique de reconnaissance ou de sécurité perceptible tactilement ou optiquement.

9. Procédé selon la revendication 8, **caractérisé en ce que** la première et/ou la deuxième couche sont constituées par une des alternatives suivantes :
- un élément formant film, en particulier un patch, un ruban de film ou un fil de sécurité,
- un substrat du document de valeur, en particulier un substrat ayant un évidement continu,
- un revêtement du substrat du document de valeur, en particulier sous forme d'un élément formant film.

10. Procédé selon la revendication 8 ou 9, **caractérisé en ce que** le soudage de la première et de la deuxième couche a lieu par utilisation d'une technique de soudage, de préférence par soudage au laser ou aux ultrasons.

11. Procédé selon une des revendications de 8 à 10, **caractérisé en ce que** la zone de soudure est composée d'une ou de plusieurs zones en forme de points ou de lignes et **en ce que** la zone de soudure constitue de préférence une information.

12. Procédé selon une des revendications de 8 à 11, **caractérisé en ce que** la première et/ou la deuxième couche et/ou le cas échéant la couche intermédiaire est sensible au laser et/ou sensible aux ultrasons et/ou thermosensible.

13. Procédé selon une des revendications de 8 à 12, **caractérisé en ce que** la zone de soudure comprend un angle ou, au moins par tronçons, un bord de l'agencement multicouche et est réalisée de préférence de manière décrivant entièrement le pourtour sur l'agencement multicouche.

14. Procédé selon une des revendications de 8 à 13, **caractérisé en ce que,** lors du soudage de la première et de la deuxième couche, le substrat multicouche est en outre entièrement sectionné, de telle sorte que la zone de soudure comprend le bord du substrat multicouche, et que, de préférence, l'agencement multicouche est découpé à partir d'une feuille, en particulier d'une feuille multiutilisations.
